# EUROPÄISCHE PATENTSCHRIFT

(11) **EP 3 114 919 B1**
(45) Veröffentlichungstag und Bekanntmachung des Hinweises auf die Patenterteilung: **28.10.2020**
(21) Anmeldenummer: 15175795.2
(22) Anmeldetag: 08.07.2015
(51) Int. Cl.: A01D 41/127, A01D 41/14

(54) **SCHNEIDWERKSANORDNUNG**
HARVESTING HEADER ASSEMBLY
SYSTEME DE TÊTE DE COUPE

(43) Veröffentlichungstag der Anmeldung: 11.01.2017
(73) Patentinhaber: Zürn Harvesting GmbH & Co. KG, 74214 Schöntal-Westernhausen (DE)
(72) Erfinder: Müller, Matthias, 74360 Ilsfeld (DE); Zürn, Rolf, 74214 Schöntal-Westernhausen (DE); Wöbcke, Steffen, 01097 Dresden (DE); Herlitzius, Thomas, 01640 Coswig (DE); Michalke, Norbert, 01259 Dresden (DE); Schuffenhauer, Uwe, 08412 Werdau (DE); Jung, Marco, 56587 Oberhonnefeld (DE); Otto, Sascha, 57612 Racksen (DE)
(74) Vertreter: Manitz Finsterwald Patent- und Rechtsanwaltspartnerschaft mbB

(56) Entgegenhaltungen:
- EP-A1- 0 377 163
- WO-A1-2014/156675
- DE-A1- 10 206 541
- DE-A1-102004 029 953
- GB-A- 1 301 844
- US-A1- 2014 245 712

## Beschreibung

Die vorliegende Erfindung betrifft eine Schneidwerksanordnung für einen Mähdrescher, mit einem Schneidwerk, das wenigstens eine die Bearbeitung und/oder Förderung eines Ernteguts betreffende Arbeitseinrichtung und einen Antrieb für die Arbeitseinrichtung aufweist, wobei der Antrieb dazu ausgebildet ist, die Arbeitseinrichtung über ein drehbares Antriebselement erntebetriebsmäßig anzutreiben.

Schneidwerksanordnungen dieser Art werden bei der maschinellen Ernte von landwirtschaftlichen Nutzpflanzen, wie zum Beispiel Getreide, Raps oder Sonnenblumen, eingesetzt. Im Allgemeinen weisen Schneidwerke für Erntemaschinen mehrere unterschiedliche Arbeitseinrichtungen wie eine drehbare Haspel, einen Messerbalken, eine Seitenmesser-Anordnung, eine Einzugsschnecke, einen Bandförderer und/oder einen Schrägförderer auf. Gängiger Weise sind die Antriebe der Arbeitseinrichtungen mechanisch und drehzahlstarr.

Insbesondere bei sich verändernden oder schwierigen Erntebedingungen, wie zum Beispiel beim Vorhandensein von Lagergetreide oder feuchtem Stroh, kann die für Normalbetriebsbedingungen ausgelegte Drehzahl ungünstig sein. Für einen Bediener der Erntemaschine ist in solchen Situationen eine Anpassung des Schneidwerks nur unter vergleichsweise großen Schwierigkeiten möglich. Beispielsweise könnte ein manuelles Schalten eines Getriebes, ein Wechseln von Kettenrädern oder dergleichen erfolgen. Dies ist jedoch zeitaufwändig und lästig. Zudem ist auf diese Weise eine Anpassung allenfalls in groben Stufen möglich. Letztendlich wird daher bei Erntemaschinen mit herkömmlichen Schneidwerken häufig die technisch verfügbare Leistung nicht voll ausgeschöpft.

Die DE 10 2004 029953 A1 offenbart eine Erntemaschine, deren Fördereinrichtungen durch einen Verbrennungsmotor angetrieben werden. Zwei Hydraulikmotoren sind über jeweilige Planetengetriebe in den Antriebsstrang des Erntevorsatzes eingekoppelt. Durch eine Änderung der Drehzahlen der Hydraulikmotoren kann die Geschwindigkeit der Vorpresswalzen des Einzugsförderers gesteuert werden.

In der WO 2014/156675 A1 ist eine Erntemaschine offenbart, bei welcher die Haspel, der Messerbalken, die Einzugsschnecke, der Schrägförderer sowie ein Teil des Dreschwerks durch jeweilige elektrische Antriebe angetrieben werden.

Es ist eine Aufgabe der Erfindung, einen effektiveren Betrieb von Erntemaschinen, insbesondere bei schwierigen Erntebedingungen, zu ermöglichen.

Die Lösung der Aufgabe erfolgt durch eine Schneidwerksanordnung mit den Merkmalen des Anspruchs 1.

Bei einer erfindungsgemäßen Schneidwerksanordnung ist die Drehzahl des Antriebselements veränderbar, wobei eine dem Antrieb zugeordnete Steuereinrich-I tung der Schneidwerksanordnung dazu ausgebildet ist, die Drehzahl des Antriebselements anhand eines vorgegebenen Drehzahl-Sollwerts zu regeln. Die Drehzahl des Antriebselements und somit die erntebetriebsmäßige Bewegung der Arbeitseinrichtung kann somit in schneller, einfacher und flexibler Weise an unterschiedliche Erntebedingungen angepasst werden. Beispielsweise kann die Schnittgeschwindigkeit der Schneidmesseranordnung oder die Fördergeschwindigkeit eines Bandförderers an die Konsistenz des Ernteguts angepasst werden. Ein derart geregeltes Schneidwerk ermöglicht einen besonders effektiven Betrieb der zugehörigen Erntemaschine.

Ein erfindungsgemäßes Schneidwerk umfasst eine drehbare Haspel, welche die wenigstens eine Arbeitseinrichtung bildet.

Der oder jeder Antrieb ist als elektrischer Antrieb, insbesondere als Elektromotor, ausgeführt. Die Drehzahl eines elektrischen Antriebs lässt sich in besonders einfacher Weise über die Ansteuerung bzw. Stromversorgung regeln. Insbesondere sind zur Regelung eines elektrischen Antriebs keine aufwändigen und kostspieligen Getriebekomponenten erforderlich. Solche Getriebekomponenten können jedoch bei Bedarf trotzdem vorhanden sein. Ein weiterer Vorteil eines elektrischen Antriebs besteht darin, dass durch eine Strom- und/oder Spannungsmessung bei Bedarf leicht die Ist-Drehzahl und/oder das Ist-Drehmoment des betreffenden Antriebselements ermittelt werden kann. Aufwändige Sensoren und dergleichen sind hierfür nicht erforderlich. Bei einem Elektromotor als Antrieb ist das drehbare Antriebselement im Allgemeinen durch die zugehörige Motorwelle gebildet.

Weiterbildungen der Erfindung sind den abhängigen Ansprüchen, der Beschreibung sowie der beigefügten Zeichnung zu entnehmen.

Vorzugsweise ist die Steuereinrichtung dazu ausgebildet, die Drehzahl des Antriebselements kontinuierlich und/oder stufenlos zu regeln. Dies kann bei einem elektrischen oder hydraulischen Antrieb durch entsprechende Ansteuerung erfolgen. Bei einem mechanischen Antrieb kann eine kontinuierliche und/oder stufenlose Regelung beispielsweise durch ein stufenloses Getriebe bewerkstelligt werden. Durch ein kontinuierliches Nachführen der Drehzahl während des Betriebs der Schneidwerksanordnung ist es möglich, stets für eine optimal angepasste Betriebsbewegung der betreffenden Arbeitseinrichtung zu sorgen. Eine stufenlose Regelung der Drehzahl des Antriebs ermöglicht eine wesentlich exaktere Anpassung der Betriebsbewegung der Arbeitseinrichtung als dies beispielsweise mit einem Vorschaltgetriebe möglich ist.

Die Arbeitseinrichtung kann eine Schneidmesseranordnung zum Mähen des Ernteguts, ein Bandförderer zum Fördern des Ernteguts oder eine Einzugsschnecke zum Zuführen des Ernteguts an einen Einzugsschacht sein.

Vorzugsweise weist das Schneidwerk mehrere die Bearbeitung und/oder Förderung des Ernteguts betreffende Arbeitseinrichtungen einschließlich jeweiliger Antriebe auf, wobei die Steuereinrichtung mit jedem der Antriebe in Verbindung steht und dazu ausgebildet ist, die Drehzahlen der Antriebselemente der Antriebe anhand jeweiliger Drehzahl-Sollwerte zu regeln. Mit anderen Worten ist es bevorzugt, nicht nur eine einzelne Arbeitseinrichtung wie zum Beispiel die Haspel eines Schneidwerks an die aktuellen Betriebsbedingungen anzupassen, sondern mehrere, besonders bevorzugt alle am Schneidwerk vorhandenen und rotierend angetriebenen Arbeitseinrichtungen. Durch die voneinander unabhängigen Regelungen der einzelnen Antriebe ist es insbesondere möglich, die verschiedenen Funktionskomponenten eines Schneidwerks optimal aufeinander abzustimmen. Dies ermöglicht einen besonders produktiven Betrieb der zugehörigen Erntemaschine. Erfindungsgemäß ist die Steuereinrichtung dazu ausgebildet, den Drehzahl-Sollwert oder alle Drehzahl-Sollwerte anhand wenigstens eines Eingangssignals automatisch, insbesondere ohne Bedienereingriff, zu bestimmen. Die automatische Bestimmung des Drehzahl-Sollwerts kann beispielsweise durch einen geeigneten Algorithmus erfolgen. Bei dem Eingangssignal kann es sich zum Beispiel um eine Sensoreingabe handeln. Alternativ könnte auch der gemessene Strom und/oder die gemessene Spannung des elektrischen Antriebs als Eingangssignal zur Bestimmung des Drehzahl-Sollwerts für diesen Antrieb und/oder einen anderen Antrieb herangezogen werden. Eine Sollwertvorgabe ohne Bedienereingriff befreit den Fahrer der Erntemaschine von der unter Umständen schwierigen Auswahl eines günstigen Werts.

Die Erfindung sieht vor, dass Mittel zum Erfassen eines Drehzahl-Istwerts und/oder eines Drehmoment-Istwerts des Antriebselements vorgesehen sind und die Steuereinrichtung dazu ausgebildet ist, den Drehzahl-Sollwert in Abhängigkeit von dem erfassten Drehzahl-Istwert und/oder dem erfassten Drehmoment-Istwert zu bestimmen. Aufgrund der separaten Erfassung des oder der Istwerte ist ein besonders zuverlässiges Einregeln der Drehzahl des Antriebselements auf den vorgegebenen Sollwert möglich.

Die Erfindung sieht vor, dass die Steuereinrichtung dazu ausgebildet ist, beruhend auf dem erfassten Drehzahl-Istwert und/oder auf dem erfassten Drehmoment-Istwert eine Plausibilitätsprüfung durchzuführen und/oder ein lastabhängiges Wartungsintervall zu definieren und/oder dass die Steuereinrichtung dazu ausgebildet ist, den Drehzahl-Sollwert des Antriebselements zu erhöhen, sobald ein Drehmoment-Istwert des betreffenden Antriebselements um einen vorgegebenen Schwellwert ansteigt. Eine Plausibilitätsprüfung kann dazu dienen, problematische Betriebssituationen rechtzeitig zu erkennen. Wenn beispielsweise das Drehmoment der Einzugsschnecke nicht zum Durchsatz passt, kann dies auf ein Klemmen des Ernteguts hinweisen. Durch entsprechende Änderungen der Einstellungen kann einer solchen Klemmung entgegengewirkt werden. Ausgeprägte Lastspitzen können zudem auf Defekte hinweisen. Ein lastabhängiges Wartungsintervall ist grundsätzlich bedarfsgerechter als ein zeitabhängiges Wartungsintervall.

Die Steuereinrichtung kann dazu ausgebildet sein, den Drehzahl-Sollwert in Abhängigkeit von einer Fahrgeschwindigkeit der Erntemaschine, einer Art des Ernteguts oder eines Erntestadiums zu bestimmen. Beispielsweise kann zur Rapsernte ein Schneidwerksbetrieb mit gegenüber einer Getreideernte verringerten Drehzahlen vorgesehen werden, um so Spritzverluste zu minimieren. Eine Effizienzsteigerung des Schneidwerks ist auch dadurch möglich, dass die Geschwindigkeit der Schneidmesseranordnung umso höher gewählt wird, je höher die aktuelle Fahrgeschwindigkeit der Erntemaschine ist.

Eine weitere Ausführungsform der Erfindung sieht vor, dass die Steuereinrichtung dazu ausgebildet ist, für das Antriebselement eines Bandförderer-Antriebs des Schneidwerks einen umso höheren Drehzahl-Sollwert vorzugeben, je höher ein Drehzahl-Istwert des Antriebselements einer Einzugsschnecke des Schneidwerks ist. Auf diese Weise kann ein besonders gleichmäßiger Erntegutfluss im Schneidwerk sichergestellt werden. Alternativ oder zusätzlich kann die Steuereinrichtung dazu ausgebildet sein, den Drehzahl-Sollwert derart zu bestimmen, dass ein Drehmoment-Istwert des Antriebselements unterhalb eines vorgegebenen Drehmoment-Schwellwerts bleibt. Dies ermöglicht eine Drehmomentbegrenzung zum Überlastschutz. Das Antriebssystem des Schneidwerks kann somit insgesamt geschont werden.

Eine weitere Ausgestaltung der Erfindung sieht vor, dass die Steuereinrichtung dazu ausgebildet ist, den Drehzahl-Sollwert bei Vorliegen eines Ruhezustandskriteriums auf einen unterhalb eines Normalbetriebsbereichs liegenden Minimalwert zu setzen und/oder dass die Steuereinrichtung dazu ausgebildet ist, bei Vorliegen eines Gutstaukriteriums das Vorzeichen des Drehzahl-Sollwerts umzukehren.

Beispielsweise ist es auf diese Weise möglich, eine etwaige Ernteflächenmessung erst bei Vorhandensein eines nachweisbaren Drehmoments am Messerantrieb zu starten. Außerdem können so unerwünschte Leermessungen bei abgesenktem Schneidwerk mit laufenden Antrieben verhindert werden. Speziell kann es günstig sein, im Vorgewende die Antriebe zu verlangsamen oder sogar vollständig zu stoppen. Speziell könnte im Vorgewende ein Stoppen des Messerbalkens und des Einzugsförderers bei langsam weiterlaufender Haspel und ebenso langsam weiterlaufender Einzugsschnecke vorgesehen sein. Durch Umkehr des Vorzeichens des Drehzahl-Sollwerts ist es möglich, eine Fördereinrichtung wie zum Beispiel die Einzugsschnecke, einen Bandförderer und/oder den Schrägförderer vorübergehend rückwärts zu betreiben und so einen vorhandenen Erntegut-Stau automatisch zu beseitigen. Mittels einer erfindungsgemäßen Schneidwerksanordnung ist es auch in einfacher Weise möglich, ein durchsatzabhängiges Signal direkt im Bereich des Schneidwerks zu erzeugen. Dieses durchsatzabhängige Signal kann in vielfältiger Weise für weitere Steuerungsaufgaben verwendet werden.

Die Steuereinrichtung kann dazu ausgebildet sein, die Drehzahl des Antriebselements anhand eines von einer externen Bedieneinrichtung empfangenen Drehzahl-Sollwerts zu regeln. Beispielweise kann sich die Bedieneinrichtung in der Fahrerkabine der Erntemaschine befinden. Somit kann der Fahrer der Erntemaschine die Drehzahl des entsprechenden Antriebs schnell und bequem von der Fahrerkabine aus regeln.

Die Erfindung betrifft weiterhin ein Verfahren zum Betreiben eines Mähdreschers, welcher ein Schneidwerk umfasst, das wenigstens eine die Bearbeitung und/oder Förderung eines Ernteguts betreffende Arbeitseinrichtung und einen Antrieb für die Arbeitseinrichtung aufweist, wobei der Antrieb dazu ausgebildet ist, die Arbeitseinrichtung über ein drehbares Antriebselement erntebetriebsmäßig anzutreiben, wobei der oder jeder Antrieb als elektrischer Antrieb ausgeführt ist, und wobei das Schneidwerk eine drehbare Haspel umfasst, welche die wenigstens eine Arbeitseinrichtung bildet.

Erfindungsgemäß wird der elektrische Antrieb wie vorstehend beschrieben angesteuert, insbesondere derart, dass die Drehzahl des Antriebselements anhand eines vorgegebenen Drehzahl-Sollwerts geregelt wird. Auf diese Weise ist eine optimale Anpassung des Schneidwerksbetriebs an unterschiedliche Erntebedingungen möglich.

Die Erfindung wird nachfolgend beispielhaft unter Bezugnahme auf die Zeichnung beschrieben.

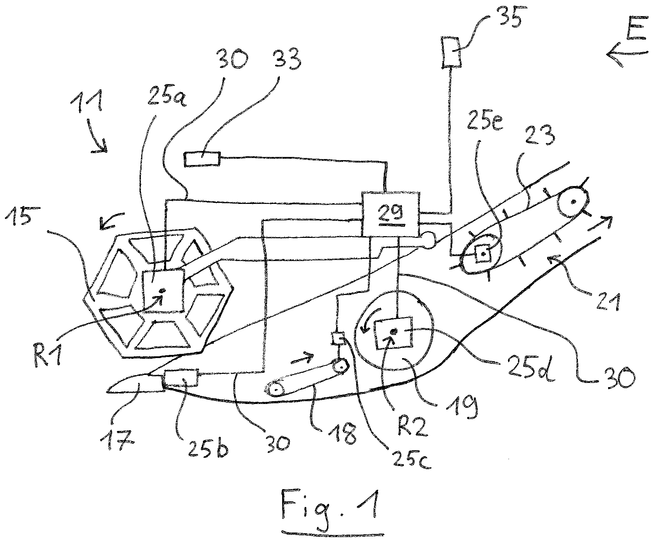

- Fig. 1: ist eine vereinfachte, teilweise aufgeschnittene Seitenansicht einer erfindungsgemäßen Schneidwerksanordnung.

In Fig. 1 ist ein Schneidwerk 11 für einen nicht dargestellten Mähdrescher gezeigt, welcher dazu ausgebildet ist, Nutzpflanzen wie zum Beispiel Roggen, Weizen, Gerste oder Raps, entlang einer Ernterichtung E zu mähen und nachfolgend einem Dreschvorgang zu unterziehen. Das Schneidwerk 11 umfasst in an sich bekannter Weise eine Haspel 15, welche um eine quer zu der Ernterichtung E verlaufende erste Rotationsachse R1 drehbar angetrieben ist, sowie eine unterhalb der Haspel 15 angeordnete Schneidmesseranordnung in Form eines quer zu der Ernterichtung E angeordneten Messerbalkens 17. Der Messerbalken 17 kann durch Seitenmesser ergänzt sein, was in Fig. 1 jedoch nicht dargestellt ist. Ein Bandförderer 18 sowie eine Einzugsschnecke 19 dienen dazu, das abgemähte Erntegut in einen Einzugsschacht 21 zu fördern. Die Einzugsschnecke 19 ist um eine parallel zu der ersten Rotationsachse R1 verlaufende zweite Rotationsachse R2 drehbar angetrieben. Innerhalb des Einzugsschachts 21 erfolgt das Fördern des Ernteguts mittels eines Schrägförderers 23. Dieser sorgt für die Förderung des Ernteguts in das Innere des Mähdreschers und zu dem entsprechenden Dreschwerk.

Der Haspel 15, dem Messerbalken 17, dem Bandförderer 18, der Einzugsschnecke 19 und dem Schrägförderer 23 sind jeweilige, lediglich in schematischer Form dargestellte Antriebe 25a-e zugeordnet, welche dazu dienen, über drehbare Antriebswellen (nicht dargestellt) und gegebenenfalls vorhandene Getriebeanordnungen die genannten Arbeitseinrichtungen 17, 18, 19, 23 in eine erntebetriebsmäßige Bewegung zu versetzen. Bei dem dargestellten Ausführungsbeispiel sind die Antriebe 25a-e als rein elektrische Antriebe ausgeführt und die drehbaren Antriebswellen sind durch die Motorwellen dieser elektrischen Antriebe gebildet.

Eine elektronische Steuereinrichtung 29 steht über entsprechende Signal- und Steuerleitungen 30 mit den Antrieben 25a-e in Verbindung. Durch geeignetes Ansteuern der Antriebe 25a-e ist die elektronische Steuereinrichtung 29 in der Lage, die Drehzahlen der betreffenden Antriebswellen auf jeweilige Drehzahl-Sollwerte einzuregeln. Es ist auch vorgesehen, dass die elektronische Steuereinrichtung 29 über die Signal- und Steuerleitungen 30 Strom- und Spannungswerte von allen Antrieben 25a-e empfängt und daraus die Drehzahl-Istwerte und die Drehmoment-Istwerte der Antriebswellen aller Antriebe 25a-e ermittelt. Weiterhin empfängt die elektronische Steuereinrichtung 29 das Ausgabesignal eines Sensors 33, bei dem es sich beispielsweise um einen optoelektronischen Sensor zum Ermitteln der Bestandshöhe des Ernteguts vor dem Mähen handeln kann. Je nach Anwendung können weitere Sensoren wie ein Temperatursensor oder ein Feuchtesensor mit der Steuereinrichtung 29 in Verbindung stehen. Schließlich empfängt die elektronische Steuereinrichtung 29 auch das Ausgabesignal einer Bedieneinrichtung 35, welche in der Fahrerkabine des Mähdreschers angeordnet ist. Bei dem dargestellten Ausführungsbeispiel ist die elektronische Steuereinrichtung 29 direkt in das Schneidwerk 11 integriert. Alternativ könnte die elektronische Steuereinrichtung 29 auch an einer anderen Stelle des Mähdreschers angeordnet sein und gemeinsam mit dem Schneidwerk 11 eine entsprechende Schneidwerksanordnung bilden.

Während des Betriebs des Mähdreschers empfängt die elektronische Steuereinrichtung 29 die Signale des Sensors 33 und der Bedieneinrichtung 35 sowie die Strom- und Spannungs-Istwerte der Antriebe 25a-e. Anhand eines in der Steuereinrichtung 29 hinterlegten Algorithmus wird unter Berücksichtigung der empfangenen Signale für jeden Antrieb 25a-e ein jeweiliger Drehzahl-Sollwert für die Antriebswelle bestimmt. Die Steuereinrichtung 29 regelt dann die Drehzahl jedes Antriebselements der Antriebe 25a-e kontinuierlich und stufenlos. Bei Bedarf kann sich für einzelne oder alle Antriebe 25a-e das Bestimmen des Drehzahl-Sollwerts auf ein direktes Übernehmen eines Sollwerts von der Bedieneinrichtung 35 beschränken.

Es versteht sich, dass der Algorithmus zur Bestimmung der einzelnen Drehzahl-Sollwerte unter Berücksichtigung der empfangenen Signale je nach Anwendung einfach oder komplex sein kann. Bei der Bestimmung der Drehzahl-Sollwerte kann die Steuereinrichtung 29 insbesondere die Drehzahl-Istwerte und die Drehmoment-Istwerte der übrigen Antriebe 25a-e, die Fahrgeschwindigkeit des Mähdreschers, die vom Fahrer über die Bedieneinrichtung 35 vorgegebene Art des Ernteguts, zum Beispiel "Raps" oder "Getreide", oder das ermittelte Erntestadium berücksichtigt werden. Bevorzugt erfolgt die Regelung unter der Vorgabe, dass ein möglichst gleichmäßiger Fluss des Ernteguts durch das gesamte Schneidwerk 11 hindurch gewährleistet wird. Bei einem plötzlichen Drehmomentanstieg an der Antriebswelle eines Antriebs 25c-e, welcher dem Bandförderer 18, der Einzugsschnecke 19 oder dem Schrägförderer 23 zugeordnet ist, ist im Allgemeinen von einem Erntegut-Stau auszugehen. Ein solcher kann dem Fahrer des Mähdreschers in die Kabine gemeldet werden. Zusätzlich können der Bandförderer 18, die Einzugsschnecke 19 und/oder der Schrägförderer 23 vorübergehend rückwärts betrieben werden, um den Erntegut-Stau aufzulösen. Sollte sich der Mähdrescher im Vorgewende befinden, können einige oder alle Antriebe 25a-e gedrosselt oder abgeschaltet werden, um hierdurch Energie zu sparen und ein Verfälschen der Ernteflächenmessung zu vermeiden. Außerdem kann die Steuereinrichtung 29 eine Drehmomentbegrenzung der Antriebe 25a-e vorsehen, um so eine Überbelastung der entsprechenden Bauteile zu vermeiden.

Insgesamt ermöglicht die Erfindung eine Anpassung der Betriebsbewegungen sämtlicher Arbeitseinrichtungen eines Schneidwerks 11, wie Haspel 15, Bandförderer 18, Einzugsschnecke 19 sowie Schrägförderer 23, und somit für eine besonders hohe Produktivität von Erntemaschinen wie Mähdreschern.

### Bezugszeichenliste

- 11: Schneidwerk
- 15: Haspel
- 17: Messerbalken
- 18: Bandförderer
- 19: Einzugsschnecke
- 21: Einzugsschacht
- 23: Schrägförderer
- 25a - e: Antrieb
- 29: Steuereinrichtung
- 30: Signal- und Steuerleitung
- 33: Sensor
- 35: Bedieneinrichtung
- E: Ernterichtung
- R1: Rotationsachse der Haspel
- R2: Rotationsachse der Einzugsschnecke

## Patentansprüche

1. Schneidwerksanordnung für einen Mähdrescher, mit einem Schneidwerk (11), das wenigstens eine die Bearbeitung und/oder Förderung eines Ernteguts betreffende Arbeitseinrichtung (15, 17, 18, 19, 23) und einen Antrieb (25a-e) für die Arbeitseinrichtung aufweist, wobei der Antrieb (25a-e) dazu ausgebildet ist, die Arbeitseinrichtung (15, 17, 18, 19, 23) über ein drehbares Antriebselement erntebetriebsmäßig anzutreiben, wobei die Drehzahl des Antriebselements veränderbar ist und wobei der oder jeder Antrieb (25a-e) als elektrischer Antrieb ausgeführt ist,
wobei das Schneidwerk (11) eine drehbare Haspel (15) umfasst, welche die wenigstens eine Arbeitseinrichtung bildet,
dadurch **gekennzeichne**t, dass
eine dem Antrieb (25a-e) zugeordnete Steuereinrichtung (29) der Schneidwerksanordnung dazu ausgebildet ist, die Drehzahl des Antriebselements anhand eines vorgegebenen Drehzahl-Sollwerts zu regeln, wobei die Steuereinrichtung (29) dazu ausgebildet ist, den Drehzahl-Sollwert oder alle Drehzahl-Sollwerte anhand wenigstens eines Eingangssignals automatisch, insbesondere ohne Bedienereingriff, zu bestimmen, wobei
Mittel zum Erfassen eines Drehzahl-Istwerts und/oder eines Drehmoment-Istwerts des Antriebselements vorgesehen sind und die Steuereinrichtung (29) dazu ausgebildet ist, den Drehzahl-Sollwert in Abhängigkeit von dem erfassten Drehzahl-Istwert und/oder dem erfassten Drehmoment-Istwert zu bestimmen, wobei
die Steuereinrichtung (29) dazu ausgebildet ist, beruhend auf dem erfassten Drehzahl-Istwert und/oder auf dem erfassten Drehmoment-Istwert eine Plausibilitätsprüfung durchzuführen und/oder ein lastabhängiges Wartungsintervall zu definieren und/oder wobei
die Steuereinrichtung (29) dazu ausgebildet ist, den Drehzahl-Sollwert des Antriebselements zu erhöhen, sobald ein Drehmoment-Istwert des betreffenden Antriebselements um einen vorgegebenen Schwellwert ansteigt.

2. Schneidwerksanordnung nach Anspruch 1,
**dadurch gekennzeichnet, dass**
die Steuereinrichtung (29) dazu ausgebildet ist, die Drehzahl des Antriebselements kontinuierlich und/oder stufenlos zu regeln.

3. Schneidwerksanordnung nach Anspruch 1 oder 2,
dadurch **gekennzichnet**, dass
eine Schneidmesseranordnung (17) zum Mähen des Ernteguts, ein Bandförderer (18) zum Fördern des Ernteguts oder eine Einzugsschnecke (19) zum Zuführen des Ernteguts an einen Einzugsschacht (21) als weitere Arbeitseinrichtung vorgesehen ist.

4. Schneidwerksanordnung nach einem der vorstehenden Ansprüche,
**dadurch gekennzeichnet, dass**
das Schneidwerk (11) mehrere die Bearbeitung und/oder Förderung des Ernteguts betreffende Arbeitseinrichtungen (15, 17, 18, 19, 23) einschließlich jeweiliger Antriebe (25a-e) aufweist, wobei die Steuereinrichtung (29) mit jedem der Antriebe (25a-e) in Verbindung steht und dazu ausgebildet ist, die Drehzahlen der Antriebselemente der Antriebe (25a-e) anhand jeweiliger Drehzahl-Sollwerte zu regeln.

5. Schneidwerksanordnung nach einem der vorstehenden Ansprüche,
**dadurch gekennzeichnet, dass**
der oder jeder Antrieb (25a-e) als Elektromotor ausgeführt ist.

6. Schneidwerksanordnung nach einem der vorstehenden Ansprüche,
**dadurch gekennzeichnet, dass**
die Steuereinrichtung (29) dazu ausgebildet ist, den Drehzahl-Sollwert in Abhängigkeit von einer Fahrgeschwindigkeit des Mähdreschers, einer Art des Ernteguts oder eines Erntestadiums zu bestimmen.

7. Schneidwerksanordnung nach einem der vorstehenden Ansprüche,
**dadurch gekennzeichnet, dass**
die Steuereinrichtung (29) dazu ausgebildet ist, für das Antriebselement eines Bandförderer-Antriebs (18) des Schneidwerks (11) einen umso höheren Drehzahl-Sollwert vorzugeben, je höher ein Drehzahl-Istwert des Antriebselements einer Einzugsschnecke (21) des Schneidwerks (11) ist, und/oder dass
die Steuereinrichtung (29) dazu ausgebildet ist, den Drehzahl-Sollwert derart zu bestimmen, dass ein Drehmoment-Istwert des Antriebselements unterhalb eines vorgegebenen Drehmoment-Schwellwerts bleibt.

8. Schneidwerksanordnung nach einem der vorstehenden Ansprüche,
**dadurch gekennzeichnet, dass**
die Steuereinrichtung (29) dazu ausgebildet ist, den Drehzahl-Sollwert bei Vorliegen eines Ruhezustands-Kriteriums auf einen unterhalb eines Normalbetriebsbereichs liegenden Minimalwert zu setzen, und/oder dass die Steuereinrichtung (29) dazu ausgebildet ist, bei Vorliegen eines Gutstau-Kriteriums das Vorzeichen des Drehzahl-Sollwerts umzukehren.

9. Verfahren zum Betreiben eines Mähdreschers, welcher ein Schneidwerk (11) umfasst, das wenigstens eine die Bearbeitung und/oder Förderung eines Ernteguts betreffende Arbeitseinrichtung (15, 17, 18, 19, 23) und einen Antrieb (25a-e) für die Arbeitseinrichtung aufweist, wobei der Antrieb (25a-e) dazu ausgebildet ist, die Arbeitseinrichtung (15, 17, 18, 19, 23) über ein drehbares Antriebselement erntebetriebsmäßig anzutreiben, wobei der oder jeder Antrieb (25a-e) als elektrischer Antrieb ausgeführt ist, und wobei das Schneidwerk (11) eine drehbare Haspel (15) umfasst, welche die wenigstens eine Arbeitseinrichtung bildet,
**dadurch gekennzeichnet, dass**
der elektrische Antrieb derart angesteuert wird, dass die Drehzahl des Antriebselements anhand eines vorgegebenen Drehzahl-Sollwerts geregelt wird, wobei
der Drehzahl-Sollwert oder alle Drehzahl-Sollwerte anhand wenigstens eines Eingangssignals automatisch, insbesondere ohne Bedienereingriff, bestimmt werden, wobei
ein Drehzahl-Istwert und/oder ein Drehmoment-Istwert des Antriebselements erfasst werden und der Drehzahl-Sollwert in Abhängigkeit von dem erfassten Drehzahl-Istwert und/oder dem erfassten Drehmoment-Istwert bestimmt wird, wobei
beruhend auf dem erfassten Drehzahl-Istwert und/oder auf dem erfassten Drehmoment-Istwert eine Plausibilitätsprüfung durchgeführt wird und/oder ein lastabhängiges Wartungsintervall definiert wird und/oder wobei der Drehzahl-Sollwert des Antriebselements erhöht wird, sobald ein Drehmoment-Istwert des betreffenden Antriebselements um einen vorgegebenen Schwellwert ansteigt.

## Claims

1. A cutting unit arrangement for a harvester comprising a cutting unit (11) which has at least one working device (15, 17, 18, 19, 23) relating to the processing and/or conveying of harvested crops and which has a drive (25a-e) for the working device, wherein the drive (25a-e) is configured to drive the working device (15, 17, 18, 19, 23) in accordance with harvesting operation via a rotatable drive element, wherein
the revolution speed of the drive element is variable, and wherein the or each drive (25a-e) is designed as an electric drive;
wherein the cutting unit (11) comprises a rotatable reel (15) which forms the at least one working device,
**characterized in that**
a control device (29) of the cutting unit arrangement associated with the drive (25a-e) is configured to regulate the revolution speed of the drive element using a predefined desired revolution speed value, wherein the control device (29) is configured to determine the desired revolution speed value or all the desired revolution speed values automatically, in particular without operator intervention, using at least one input signal; wherein
means are provided for detecting an actual revolution speed value and/or an actual torque value of the drive element and the control device (29) is configured to determine the desired revolution speed value in dependence on the detected actual revolution speed value and/or on the detected actual torque value; wherein
the control device (29) is configured to carry out a plausibility check and/or to define a load-dependent servicing interval on the basis of the detected actual revolution speed value and/or on the basis of the detected actual torque value; and/or wherein
the control device (29) is configured to increase the desired revolution speed value of the drive element as soon as an actual torque value of the respective drive element increases by a predefined threshold value.

2. A cutting unit arrangement in accordance with claim 1,
**characterized in that**
the control device (29) is configured to regulate the revolution speed of the drive element continuously and/or steplessly.

3. A cutting unit arrangement in accordance with claim 1 or claim 2,
**characterized in that**
a cutting blade arrangement (17) for reaping the harvested crops, a belt conveyor (18) for conveying the harvested crops or an intake auger (19) for supplying the harvested crops to an intake shaft (21) is provided as a further working device.

4. A cutting unit arrangement in accordance with any one of the preceding claims,
**characterized in that**
the cutting unit (11) has a plurality of working devices (15, 17, 18, 19, 23), including respective drives (25a-e), relating to the processing and/or conveying of the harvested crops, with the control device (29) being connected to each of the drives (25a-e) and being configured to regulate the revolution speeds of the drive elements of the drives (25a-e) using respective desired revolution speed values.

5. A cutting unit arrangement in accordance with any one of the preceding claims,
**characterized in that**
the or each drive (25a-e) is designed as an electric motor.

6. A cutting unit arrangement in accordance with any one of the preceding claims,
**characterized in that**
the control device (29) is configured to determine the desired revolution speed value in dependence on a travel speed of the harvester, on a kind of harvested crops, or on a harvest stage.

7. A cutting unit arrangement in accordance with any one of the preceding claims,
**characterized in that**
the control device (29) is configured to predefine a desired revolution speed value for the drive element of a belt conveyor drive (18) of the cutting unit (11) that is the higher, the higher an actual revolution speed value of the drive element of an intake auger (21) of the cutting unit (11) is; and/or **in that**
the control device (29) is configured to determine the desired revolution speed value such that an actual torque value of the drive element remains below a predefined torque threshold value.

8. A cutting unit arrangement in accordance with any one of the preceding claims,
**characterized in that**
the control device (29) is configured to set the desired revolution speed value to a minimal value below a normal operating range on a presence of a state of rest criterion; and/or **in that**
the control device (29) is configured to reverse the sign of the desired revolution speed value on a presence of a harvest bottleneck criterion.

9. A method of operating a harvester which comprises a cutting unit (11) which has at least one working device (15, 17, 18, 19, 23) relating to the processing and/or conveying of harvested crops and which has a drive (25a-e) for the working device, wherein the drive (25a-e) is configured to drive the working device (15, 17, 18, 19, 23) in accordance with harvesting operation via a rotatable drive element, wherein the or each drive (25a-e) is designed as an electric drive, and wherein the cutting unit (11) comprises a rotatable reel (15) which forms the at least one working device,
**characterized in that**
the electric drive is controlled such that the revolution speed of the drive element is regulated using a predefined desired revolution speed value, wherein
the desired revolution speed value or all the desired revolution speed values is/are determined automatically, in particular without operator intervention, using at least one input signal; wherein
an actual revolution speed value and/or an actual torque value of the drive element is/are detected and the desired revolution speed value is determined in dependence on the detected actual revolution speed value and/or on the detected actual torque value; wherein
a plausibility check is carried out and/or a load-dependent servicing interval is defined on the basis of the detected actual revolution speed value and/or on the basis of the detected actual torque value; and/or wherein
the desired revolution speed value of the drive element is increased as soon as an actual torque value of the respective drive element increases by a predefined threshold value.

## Revendications

1. Ensemble de mécanisme de coupe pour une moissonneuse-batteuse, comprenant un mécanisme de coupe (11) qui comporte au moins un dispositif de travail (15, 17, 18, 19, 23) approprié au traitement et/ou au transport d'un produit de récolte, et un entraînement (25a - e) pour le dispositif de travail, l'entraînement (25a - e) étant réalisé pour entraîner le dispositif de travail (15, 17, 18, 19, 23) en mode de récolte par l'intermédiaire d'un élément d'entraînement rotatif, la vitesse de rotation de l'élément d'entraînement pouvant être modifiée, et le ou chaque entraînement (25a - e) étant réalisé sous la forme d'un entraînement électrique, le mécanisme de coupe (11) comprenant un rabatteur rotatif (15) qui constitue ledit au moins un dispositif de travail,
**caractérisé en ce que**
un dispositif de commande (29), associé à l'entraînement (25a - e), de l'ensemble de mécanisme de coupe est réalisé pour réguler la vitesse de rotation de l'élément d'entraînement sur la base d'une valeur de consigne de vitesse de rotation prédéterminée,
le dispositif de commande (29) est réalisé pour déterminer automatiquement, en particulier sans intervention de l'opérateur, la valeur de consigne de vitesse de rotation ou toutes les valeurs de consigne de vitesse de rotation sur la base d'au moins un signal d'entrée, et
il est prévu des moyens pour détecter une valeur réelle de la vitesse de rotation et/ou une valeur réelle du couple de l'élément d'entraînement, et le dispositif de commande (29) est réalisé pour déterminer la valeur de consigne de vitesse de rotation en fonction de la valeur réelle détectée de la vitesse de rotation et/ou de la valeur réelle détectée du couple, et
le dispositif de commande (29) est réalisé pour effectuer un contrôle de plausibilité sur la base de la valeur réelle détectée de la vitesse de rotation et/ou de la valeur réelle détectée du couple, et/ou pour définir un intervalle de maintenance dépendant de la charge, et/ou
le dispositif de commande (29) est réalisé pour augmenter la valeur de consigne de la vitesse de rotation de l'élément d'entraînement dès qu'une valeur réelle du couple de l'élément d'entraînement approprié augmente d'une valeur seuil prédéterminée.

2. Ensemble de mécanisme de coupe selon la revendication 1,
**caractérisé en ce que**
le dispositif de commande (29) est réalisé pour réguler la vitesse de rotation de l'élément d'entraînement en continu et/ou sans gradation.

3. Ensemble de mécanisme de coupe selon la revendication 1 ou 2,
**caractérisé en ce que**
en tant qu'autre dispositif de travail, il est prévu un ensemble à lames de coupe (17) pour faucher le produit de récolte, un convoyeur à bande (18) pour transporter le produit de récolte ou une vis sans fin d'alimentation (19) pour amener le produit de récolte à une goulotte d'alimentation (21).

4. Ensemble de mécanisme de coupe selon l'une des revendications précédentes,
**caractérisé en ce que**
le mécanisme de coupe (11) comprend plusieurs dispositifs de travail (15, 17, 18, 19, 23) approprié au traitement et/ou au transport du produit de récolte, y compris les entraînements respectifs (25a - e), le dispositif de commande (29) étant relié à chacun des entraînements (25a - e) et étant réalisé pour commander les vitesses de rotation des éléments d'entraînement des entraînements (25a - e) sur la base des valeurs de consigne respectives de la vitesse de rotation.

5. Ensemble de mécanisme de coupe selon l'une des revendications précédentes,
**caractérisé en ce que**
le ou chaque entraînement (25a - e) est réalisé sous la forme d'un moteur électrique.

6. Ensemble de mécanisme de coupe selon l'une des revendications précédentes,
**caractérisé en ce que**
le dispositif de commande (29) est réalisé pour déterminer la valeur de consigne de la vitesse de rotation en fonction d'une vitesse de déplacement de la moissonneuse-batteuse, d'un type de produit de récolte ou d'un stade de récolte.

7. Ensemble de mécanisme de coupe selon l'une des revendications précédentes,
**caractérisé en ce que**
le dispositif de commande (29) est réalisé pour prédéfinir une valeur de consigne de la vitesse de rotation de l'élément d'entraînement d'un entraînement de convoyeur à bande (18) du mécanisme de coupe (11), valeur qui est d'autant plus élevée qu'une valeur réelle de la vitesse de rotation de l'élément d'entraînement d'une vis sans fin d'alimentation (21) du mécanisme de coupe (11) est élevée, et/ou
le dispositif de commande (29) est réalisé pour déterminer la valeur de consigne de la vitesse de rotation de telle sorte qu'une valeur réelle du couple de l'élément d'entraînement reste inférieure à une valeur seuil prédéterminée du couple.

8. Ensemble de mécanisme de coupe selon l'une des revendications précédentes,
**caractérisé en ce que**
le dispositif de commande (29) est réalisé pour, en présence d'un critère d'état de repos, régler la valeur de consigne de la vitesse de rotation à une valeur minimale située en dessous d'une plage de fonctionnement normale, et/ou **en ce que**
le dispositif de commande (29) est réalisé pour, en présence d'un critère de bourrage de récolte, inverser le signe de la valeur de consigne de la vitesse de rotation.

9. Procédé pour faire fonctionner une moissonneuse-batteuse comprenant un mécanisme de coupe (11) qui présente au moins un dispositif de travail (15, 17, 18, 19, 23) approprié au traitement et/ou au transport d'un produit de récolte et un entraînement (25a - e) pour le dispositif de travail,
l'entraînement (25a - e) étant réalisé pour entraîner le dispositif de travail (15, 17, 18, 19, 23) en mode de récolte par l'intermédiaire d'un élément d'entraînement rotatif, le ou chaque entraînement (25a - e) étant réalisé sous la forme d'un entraînement électrique, et le mécanisme de coupe (11) comprenant un rabatteur rotatif (15) qui constitue ledit au moins un dispositif de travail,
**caractérisé en ce que**
l'entraînement électrique est piloté de telle sorte que la vitesse de rotation de l'élément d'entraînement est régulée sur la base d'une valeur de consigne de vitesse de rotation prédéterminée, et
la valeur de consigne de vitesse de rotation ou toutes les valeurs de consigne de vitesse de rotation sont déterminées automatiquement, en particulier sans intervention de l'opérateur, sur la base d'au moins un signal d'entrée, et
on détecte une valeur réelle de la vitesse de rotation et/ou une valeur réelle du couple de l'élément d'entraînement et on détermine la valeur de consigne de la vitesse de rotation en fonction de la valeur réelle détectée de la vitesse de rotation et/ou de la valeur réelle détectée du couple, et
on effectue un contrôle de plausibilité sur la base de la valeur réelle détectée de la vitesse de rotation et/ou de la valeur réelle détectée du couple, et/ou
on définit un intervalle de maintenance dépendant de la charge, et/ou on augmente la valeur de consigne de la vitesse de rotation de l'élément d'entraînement dès qu'une valeur réelle du couple de l'élément d'entraînement approprié augmente d'une valeur seuil prédéterminée.
